(19) **Europäisches Patentamt / European Patent Office / Office européen des brevets**

(11) **EP 2 688 308 B1**

(12) **EUROPEAN PATENT SPECIFICATION**

(45) Date of publication and mention
of the grant of the patent:
**27.04.2016 Bulletin 2016/17**

(51) Int Cl.:
***H04N 21/845*** (2011.01)     ***H04N 21/431*** (2011.01)
***H04N 21/472*** (2011.01)

(21) Application number: **13177067.9**

(22) Date of filing: **18.07.2013**

(54) **Video display process**

Videoanzeigeverfahren

Procédé d'affichage vidéo

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.07.2012 GB 201212742**

(43) Date of publication of application:
**22.01.2014 Bulletin 2014/04**

(73) Proprietor: **Axivity Limited
Newcastle upon Tyne
NE4 5TF (GB)**

(72) Inventors:
• **Olivier, Patrick
YORK, North Yorkshire YO23 1NP (GB)**

• **Jackson, Daniel
Newcastle upon Tyne, Tyne and Wear NE3 1QX
(GB)**

(74) Representative: **Archer, Graham John
Urquhart-Dykes & Lord LLP
Cale Cross House
156 Pilgrim Street
Newcastle upon Tyne NE1 6SU (GB)**

(56) References cited:
**EP-A1- 2 463 860      US-A1- 2004 128 317
US-A1- 2010 134 506      US-A1- 2011 085 022
US-A1- 2012 174 010**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a video display process and relates particularly, but not exclusively, to a method of displaying video images for use in reviewing videos and selecting a portion of video to view.

With the digital recording of video images it has become much easier to jump from one portion of a video to another. For example, most commercially produced DVDs, in particular films, include a chapter or scene selection option in which a user is offered one or more menus that allow them to jump to a particular part of the film. These menus are often text or show an image taken from the scene. In video editing software it is known for a section of video to be displayed in sections with each section represented by a thumbnail (small image) version of a frame, typically the first frame, taken from that section of video. Similar systems are used by some computer based video display programs including those that display video over the internet.

Such static single image representations of a section of moving video do not necessarily represent the content for the whole of that portion of the video. Furthermore, a user looking for a particular short clip of video may not be able to locate that section of video if the thumbnail images represent other portions of the video. For example, if the video is a surveillance video of a static and generally unchanging scene it is difficult to spot a short term event, such as a person entering and leaving the scene.

Examples of video display processes of the prior art which demonstrate some of the problems set out above are disclosed in US2004/128317, EP2463860, US2011/085022, US2012/174010 and US2010/134506.

Preferred embodiments of the present invention seek to overcome the above described disadvantages of the prior art.

According to an aspect of the present invention there is provided a method of displaying video images, comprising:-

dividing at least a portion of video data into a plurality of video data sections, said video data being data that is capable of being processed and displayed on a display device as a first moving video image and said video data sections representing consecutive sections in time of said moving video image;

displaying on a display device a plurality of second moving video images processed from a plurality of said video data sections; and

characterised by moving the position that said second moving video images are displayed on said display device so that at least one said second moving video image finishes being displayed substantially where an adjacent second moving video image, in the directions of movement, started being displayed.

By playing multiple thumbnail sized portions or clips of a moving video image the advantage is provided that at least part, or preferably all, of a longer sequence of video can be displayed on a single screen at one time. This makes the process of reviewing the video data to find a particular point of interest significantly easier than is possible using methods of the prior art. Furthermore, by moving the thumbnail video images, so that each video thumbnail finishes where the next thumbnail starts provides the further advantage that a sequence of the video can be properly followed as it appears to transition across the screen. However, only a small amount of data is required to produce and store the multiple video images which can then be played in a loop. As a result a user reviewing the video is able to either see an overview of the whole video in thumbnail sized displays or can easily follow one particular thumbnail for a period longer than the individual clips.

In a preferred embodiment the second moving video images are displayed on said display device in a line.

By displaying the thumbnail moving video images in a line, the advantage is provided that the line of thumbnails can be displayed over the top of the main image, which is displayed at full size. As a result, this system can be used for searching forwards and backwards along a time line of a video. This system is particularly useful for video players on computers including those playing video images over the internet.

In another preferred embodiment the second moving video images are displayed on said display device in a grid comprising a plurality of lines.

By displaying the thumbnail video images in a grid, the advantages provided that a large quantity of video data can be reviewed in a short period of time. For example, if each thumbnail is approximately a tenth of the size of the original video image (i.e. slightly less than one tenth of the length of the screen and slightly less than one tenth of the height of the screen) the video can be divided into one hundred parts all displayed on screen at the same time. As a result, for a twenty minute video (typical for a single television programme) each thumbnail is twelve seconds long and a twelve second clip allows the whole programme to be viewed at one time. For a ninety minute video (typical for a feature film) a fifty-four second clip is required to display the entire film.

In a preferred embodiment the second moving image at the end of a first line is repeated at the start of a next line.

In another preferred embodiment the second moving image at the end of said first line fades out of view and said repeated second moving image fade into view.

By repeating the ends of the lines, and in particular by fading them in and out, the advantages provided that the user is able to easily transition from the end of one line of a grid to the start of the next line of the grid without missing any of the video content. The starting of the fading prompts the user to look to the start of the next line.

In a further preferred embodiment the second moving images are formed from a plurality of frames and each second moving image moves a distance ($d$) on said display device per frame according to the formula:

$$d = D/f$$

where $D$ is the distance between equivalent edges of adjacent second moving video images and $f$ is the number of frames in said second moving video image.

In another preferred embodiment the plurality of second moving video images are recorded together to form third video data which can be processed and displayed as a third moving video image comprising the plurality of second moving images.

In a further preferred embodiment the third moving video image is displayed on said display device in a loop.

By producing video data that is an amalgamation of all of the thumbnails displayed together, for example in the grid, provides the advantage that this short piece of video data can be displayed repeatedly in a loop allowing the viewer to follow the entire video whilst requiring only a small amount of data. For recorded video, the output cyclically repeats, allowing the output to be generated once and repeatedly played in a loop. Less data is required as fewer output frames are required than the original number of video frames.

The method may further comprise providing selection means for selecting on said display device at least one portion of said display device associated with at least one respective second moving video image.

By providing means for selecting a thumbnail the advantages provided that a user can jump to a particular part of the video data of interest and display that data full size on the screen. The selection of a portion of video can be used for any other suitable purpose.

According to another aspect of the present invention there is provided a method of reviewing recorded moving video images, comprising:-

    capturing first video data using at least one video data capture device; and

    displaying on at least one display device a plurality of second moving video images according to the method set out above.

According to a further aspect of the present invention there is provided a method of providing a menu on a display device for allowing a user to select a portion of first video data, comprising:-

    displaying on at least one display device a plurality of second moving video images according to the method set out above;

    providing selection means for selecting on said display device at least one portion of said display device associated with at least one respective second moving video image;

    displaying on at least one display device at least one first moving video image processed from said first video data and starting at a point in said first video data represented by said selected second moving video image.

According to an aspect of the present invention there is provided a computer program product for displaying video images, comprising:- first computer executable code for dividing at least a portion of video data into a plurality of video data sections, said video data being data that is capable of being processed and displayed on a display device as a first moving video image and said video data sections representing consecutive sections in time of said moving video image;

    second computer executable code for displaying on a display device a plurality of second moving video images processed from a plurality of said video data sections; and

    characterised by third computer executable code for moving the position that said second moving video images are displayed on said display device so that a said second moving video image finishes being displayed substantially where an adjacent second moving video image, in the directions of movement, started being displayed.

In a preferred embodiment the second computer executable code causes said second moving video images to be displayed on said display device in a line.

In another preferred embodiment the second computer executable code causes said second moving video images to be displayed on said display device in a grid comprising a plurality of lines.

In a further preferred embodiment the second computer executable code causes a said second moving image at the end of a first line to be repeated at the start of a next line.

In a preferred embodiment the second computer executable code causes said second moving image at the end of said first line fades out of view and said repeated second moving image fade into view.

In another preferred embodiment the third executable code causes said second moving images to be formed from a plurality of frames and each second moving image moves a distance ($d$) on said display device per frame according to the formula:

$$d = D/f$$

where *D* is the distance between equivalent edges of adjacent second moving video images and *f* is the number of frames in said second moving video image.

The computer program product may further comprise fourth computer executable code for recording said plurality of second moving video images together to form third video data which can be processed and displayed as a third moving video image comprising the plurality of second moving images.

In a preferred embodiment the fourth computer code causes said third moving video image to be displayed on said display device in a loop.

The computer program product may further comprise fifth computer code for providing selection means for selecting on said display device at least one portion of said display device associated with at least one respective second moving video image.

According to another aspect of the present invention there is provided a computer program product for reviewing recorded moving video images, comprising:-

sixth computer executable code for capturing first video data using at least one video data capture device; and

computer executable code for displaying on at least one display device a plurality of second moving video images as set out above.

According to a further aspect of the present invention there is provided a computer program product for providing a menu on a display device for allowing a user to select a portion of first video data, comprising:-

computer executable code for displaying on at least one display device a plurality of second moving video images as set out above;

seventh computer executable code for providing selection means for selecting on said display device at least one portion of said display device associated with at least one respective second moving video image;

eighth computer executable code for displaying on at least one display device at least one first moving video image processed from said first video data and starting at a point in said first video data represented by said selected second moving video image.

According to an aspect of the present invention there is provided an apparatus for displaying video images, comprising:-

at least one processor for dividing at least a portion of video data into a plurality of video data sections, said video data being data that is capable of being processed and displayed on a display device as a first moving video image and said video data sections representing consecutive sections in time of said moving video image; and

at least one display device for displaying a plurality of second moving video images processed from a plurality of said video data sections, characterised in that at least one said processor processes said data so as to move the position that said second moving video images are displayed on said display device so that a said second moving video image finishes being displayed substantially where an adjacent second moving video image, in the directions of movement, started being displayed.

In another preferred embodiment the display device displays said second moving video images in a line.

In a further preferred embodiment the display device displays said second moving video images in a grid comprising a plurality of lines.

In a preferred embodiment the display device displays a said second moving image at the end of a first line is repeated at the start of a next line.

In another preferred embodiment the display device displays said second moving image at the end of said first line fading out of view and said repeated second moving image fading into view.

In a further preferred embodiment the display device displays said second moving images formed from a plurality of frames and each second moving image moves a distance (d) on said display device per frame according to the formula:

$$d = D/f$$

where D is the distance between equivalent edges of adjacent second moving video images and *f* is the number of frames in said second moving video image.

In a preferred embodiment the plurality of second moving video images are recorded together to form third video data which can be processed and displayed as a third moving video image comprising the plurality of second moving images.

In another preferred embodiment the third moving video image is displayed on said display device in a loop.

The apparatus may further comprise selection means for selecting on said display device at least one portion of said display device associated with at least one respective second moving video image.

According to another aspect of the present invention there is provided an apparatus for reviewing recorded moving video images, comprising:-

at least one video capture device for capturing first video data; and
an apparatus for displaying video images as set out above.

According to a further aspect of the present invention there is provided an apparatus for providing a menu on a display device for allowing a user to select a portion of first video data, comprising:-

displaying on at least one display device a plurality of second moving video images as set out above;

providing selection means for selecting on said display device at least one portion of said display device associated with at least one respective second moving video image;

displaying on at least one display device at least one first moving video image processed from said first video data and starting at a point in said first video data represented by said selected second moving video image.

Preferred embodiments of the present invention will now be described by way of example only, and not in any limitative sense, with reference to the accompanying drawings in which:-

Figure 1 is a schematic representation of an embodiment of the present invention;

Figure 2 is a schematic representation of a screen display used in the present invention;

Figure 3 is a schematic representation of another screen display used in the present invention; and

Figures 4, 5 and 6 are representations of video images showing the arrangement as they are displayed on a screen.

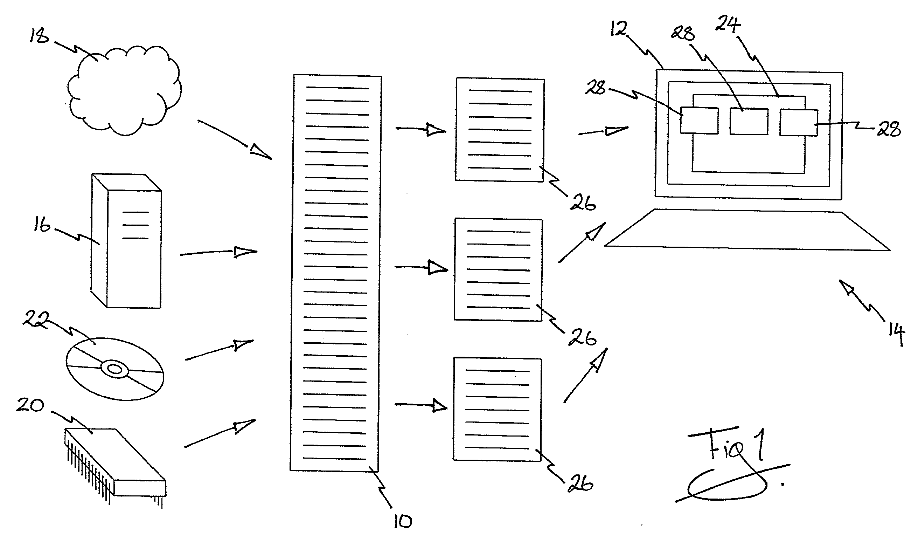

Referring to Figures 1 to 3, a method of displaying video images on a display device utilises video data 10 that is data that can be processed for display on a display device 12. The display device 12 is typically a screen on a computer 14 but can be a screen on any suitable device such as a handheld computer or mobile phone, a television screen, a screen on a digital video camera, a television screen attached to a data player such as a DVD player or a screen attached to a surveillance system that receives video images from surveillance video cameras. The video data 10 could be stored on a data server 16 or on the internet 18 or other linked networks. The data could also be stored on data memory 20 contained within computer 14. The data could also be stored on any suitable data storage medium such as that used in video display devices and could therefore be stored on, for example, a DVD 22. The video data 10 is data that can be displayed on display device 12 as a first moving video image 24 having been processed from the video data 10 in a manner familiar to persons skilled in the art.

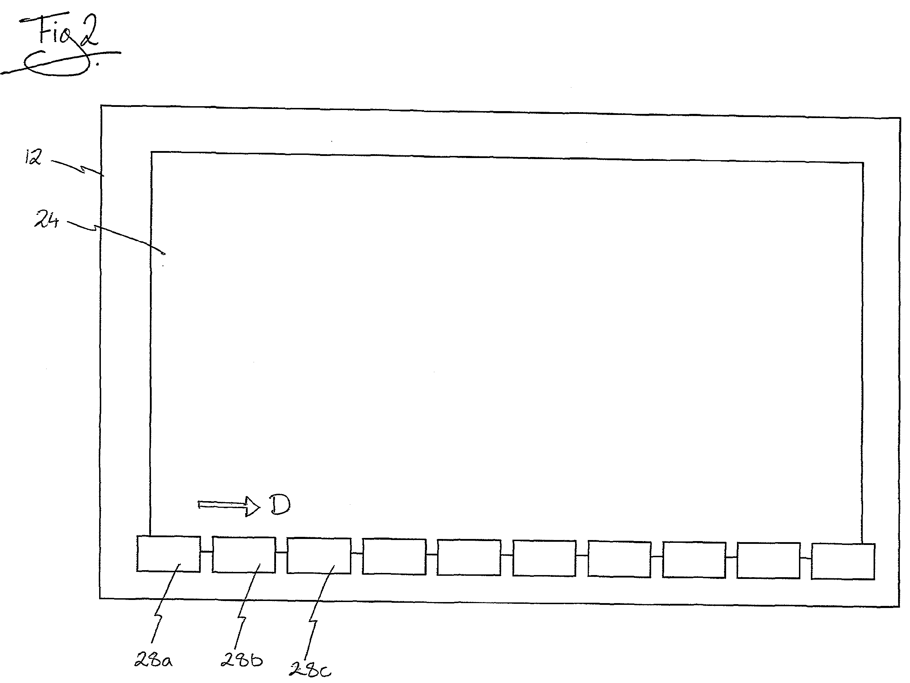

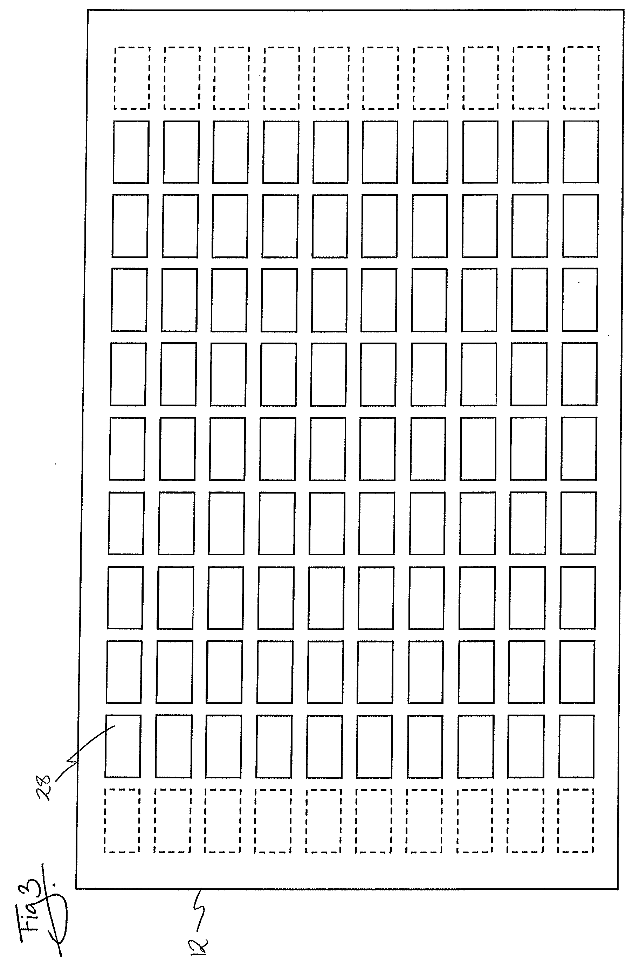

During the process of the present invention, the video data 10 is divided into video data sections 26 each representing consecutive periods in time of the first moving video image 24. Each video data section 26 is processed to produce a series of second moving video images that are smaller versions (thumbnails 28) of the first moving video image 24. Each thumbnail is a clip or a portion of the first video image 24 so that the first moving video image 24 is divided into the series of thumbnails 28 that could be run consecutively together to produce a thumbnail sized version of the first moving video image 24. The thumbnails 28 are displayed on display device 12 as a line of thumbnail images, such as seen in Figure 2, or as a grid of thumbnail images as seen in Figure 3.

In a preferred embodiment of the invention, each thumbnail moves across the screen, preferably from left to right, from a starting position 30 to a finishing position 32. Referring to Figure 2, a first thumbnail 28a has a starting position as shown in Figure 2. Similarly, second and third thumbnails 28b and 28c have starting positions as shown in Figure 2. Thumbnail 28a plays through its video clip, the thumbnail 28a moves across the screen in direction D. At the same time, the second and third thumbnails 28b and 28c move in the same direction. Each thumbnail moves towards its next or adjacent thumbnail so that by the time the end of the thumbnail clip is reached, the thumbnail has moved from its starting position 30 to its finishing position 32 which is almost coincident with the starting position of the next thumbnail. For example, thumbnail 28a moves from the position shown in Figure 2 in direction D such that at the end of the clip of thumbnail 28a it has moved to a position just short of the starting position shown for thumbnail 28b in Figure 2.

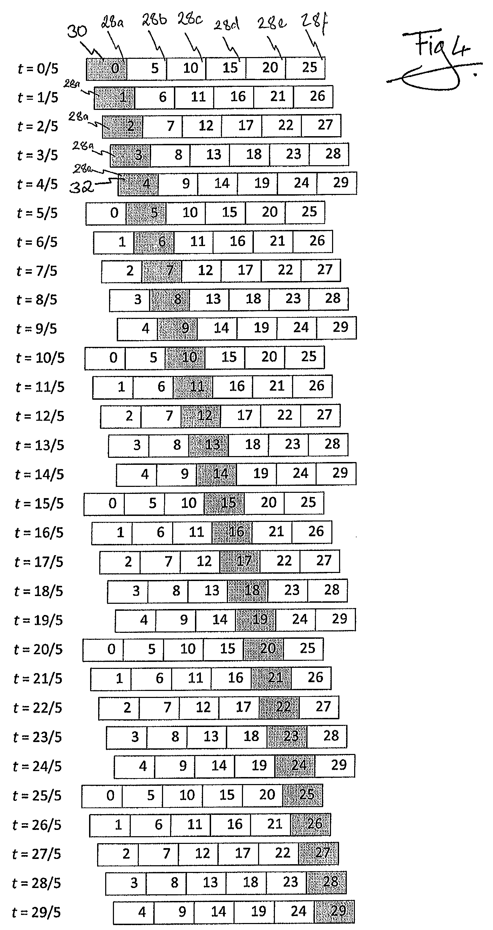

This movement is explained in greater detail with reference to Figure 4, which shows a simplified example of the present invention. In this example, the first moving image 24 is a video image formed from thirty frames labelled 0 to 29. The video image data 10, from which the first moving video image 24 is formed, is divided into six video data sections 26 that are processed to form six moving video image thumbnails 28a, 28b, 28c, 28d, 28e and 28f. Each thumbnail 28a to 28f consists of five frames, for example, the first thumbnail 28a consists of five frames labelled 0 to 4. Displaying each of the thumbnails on screen in turn forms the moving video image thumbnail 28a. As previously described, the thumbnail 28a moves across the screen from a starting point indicated at 30 to a finishing point indicated at 32. The first frame, labelled 0, is displayed at the starting position 30 and the last frame, labelled 4, is displayed at the finishing position 32. The frames in between, labelled 1, 2 and 3, are displayed at consecutive positions between the starting position 30 and the finishing position 32. The distance (*d*) moved by the thumbnail between each frame is determined according to the formula

$$d = D/f$$

where *D* is the distance between equivalent edges of adjacent second moving video images and *f* is the number of frames in said second moving video image.

At the same time as the frames of first thumbnail 28a are being displayed at positions moving across the screen, the same process is occurring with the second, third, fourth, fifth and sixth thumbnails (28b to 28f). As can be seen from Figure 4, the six thumbnail images, formed in a line, move across the screen in a line. As a result, a user watching the thumbnail images will find their eye drawn across the screen in direction D. As can be seen in Figure 4, as the frame moves from the frame labelled 4 to the frame labelled 5, at the time indicated t = 5/5, the user's eye will continue to follow the movement of the frames of the thumbnails across the screen. As a result, the user is able to follow all thirty frames of the thumbnail images from the first frame, labelled 0, to the last frame, labelled 29. This following of the image feels natural to the user and is without interruption.

It should be noted that the sequence of thumbnails 28a to 28f at times t = 0/5 to t = 4/5 simply repeats themselves a further six times, at t = 5/5 to t = 9/5, at t = 10/5 to t = 14/5 etc. As a result, if the line of thumbnails 28a to 28f, with each five frames displayed as a moving image, is repeated on a loop, the effect shown in Figure 4, the entire thirty frames can be reviewed as they transition across the screen. As a result, little data needs to be stored or transferred to display these thumbnail images for the entire video data and little processing of the data is required once the thumbnails have been produced and are displayed in a loop.

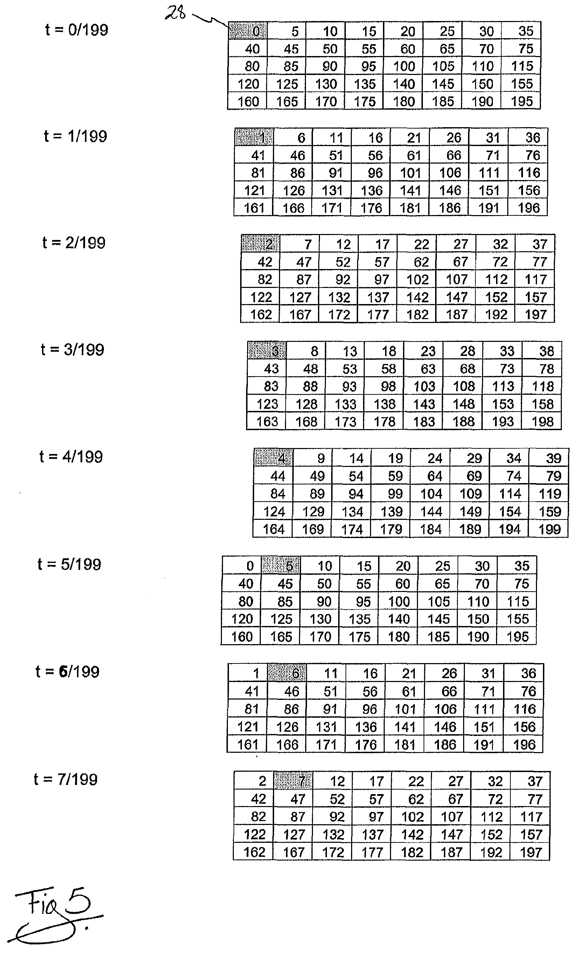

With additional reference to Figures 3, 5 and 6, a similar process to that described above is demonstrated in these figures in which a first video image is divided into a grid of thumbnails. The first video image is formed from 200 consecutive frames labelled 0 to 199. Each of the thumbnails 28 are formed from five of these frames. In Figure 5 the thumbnails are arranged in a grid of 8 x 5 thumbnails making a total of 40. In the first display of thumbnails at t = 0/199, the grid of thumbnails is displayed consisting of the first thumbnail frame, labelled 0, the sixth thumbnail frame labelled 5, the eleventh thumbnail frame labelled 10, etc. The next set of thumbnail frames is displayed in a grid at t = 1/199 consisting of the second thumbnail frame, labelled 1, the seventh thumbnail frame labelled 6, the twelfth thumbnail frame labelled 11, etc. The entire grid of thumbnail frames moves across the screen according to the formula previously given and this process is repeated for the third, fourth and fifth grids at times t = 2/199, t = 3/199 and t = 4/199. This process is then looped and the five grids of frames displayed repeatedly. As a result, a user following the sequence of frames will have their eye drawn along so that the transition from t = 4/199 to t = 5/199 they will automatically start looking at the sixth frame, labelled 5, and then at t = 6/199, the seventh frame, labelled 6. As a result, the user will follow the thumbnail of the video image as though it tracks across the screen.

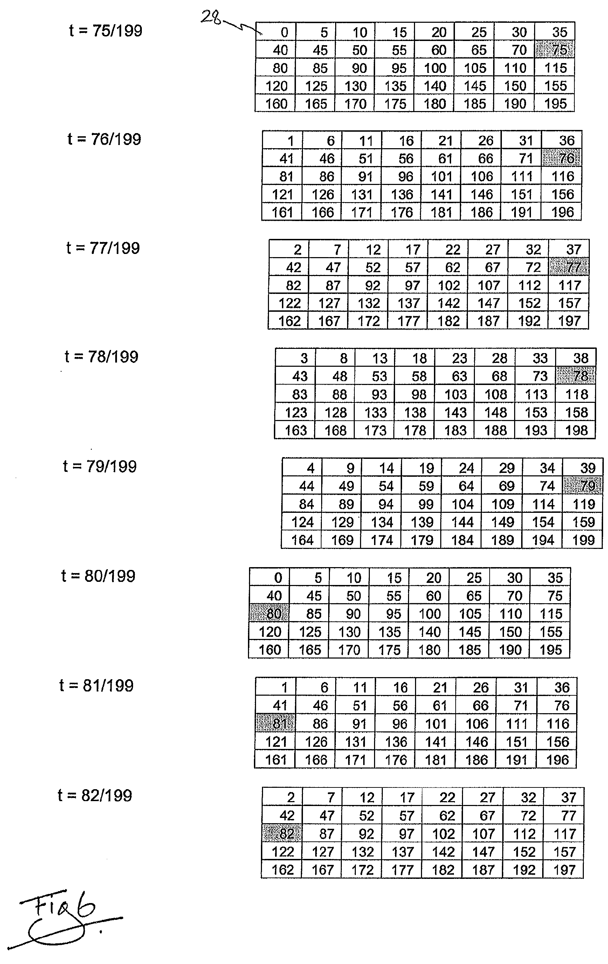

Figure 6 demonstrates where the thumbnail reaches the end of a line. The highlighted frames in this instance start at t = 75/199 with the frame labelled 75 and continues through to t = 79/199, labelled 79 on the end of the second row of the grid. The next frame, labelled 80, is on the first row of the third line and as a result, the user's eye must transition to the beginning of this next row in order to continue to follow the video image. The subsequent frame 81 is highlighted at t = 81/199.

In order to assist this transfer from one line to the next it is preferable to prompt the user to make the transition by starting to fade out the last thumbnail on each line whilst fading in the same thumbnail on the following line. This is not indicated on Figures 5 and 6 but is illustrated by the use of dotted lines in Figure 3. As a result, and as shown in Figure 3, when a video is divided into one hundred sections of video data it is preferable to display a grid of 11 x 10 thumbnails with the first and last thumbnails being repeats of each other with the last thumbnail on a line fading out and the first on the next line being a repeat of the last on the previous line fading in at the same time.

There follows a non-exhaustive list of uses that the process for creating a screen display can be put. Each of the thumbnails may represent a selectable item on a menu. For example, if a video is being displayed on a standard computer device with a mouse pointer or with a touch screen, selection of a thumbnail can result in the video being played from that point. Similarly, this process can be used for chapter selection on a DVD or similar video data storage medium, where a feature film or television programme is divided into multiple thumbnail images but displayed on screen and a selection device, mouse pointer, cursor selection, touch screen or the like, is used to start the film or programme from that point.

This process can also be used to display video surveillance images on a screen. As a result, security personnel can review multiple lower resolution images at the same time significantly speeding up the process for searching for a particular incident. This can also be used with a live feed from a security or other video camera. In the instance the movement of the thumbnail images may not be applicable. For example, a security video feed could be displayed on a review screen. Typically the live thumbnail would be displayed in the bottom right hand corner of the screen and the remaining thumbnails show the surveillance video at a time (*t*) lagging behind the live feed such that

$$t = \text{live} - (n \times i)$$

where n is the number of the thumbnail counted from the live thumbnail in the bottom right hand corner and $i$ is the time interval between each thumbnail. For example, if the interval of the thumbnail is 1 minute, then the thumbnail next to the live feed is one minute behind the live feed, the thumbnail next to that is two minutes behind that and so on. If a grid of $8 \times 8$ videos is being displayed at one minute intervals just over an hour of video can be displayed one screen at one time and reviewed in a minute. Alternatively an arrangement like that shown in Figure 2 can be used where the live feed is shown in a main image and the thumbnail images show the images at time intervals before the live feed. As a result, if security personnel are distracted from viewing a live feed they can quickly review the historic feed that they missed.

It will be appreciated by persons skilled in the art that the above embodiments have been described by way of example only and not in any limitative sense, and that the various alterations and modifications are possible without departure from the scope of the invention as defined by the appended claims. For example, a given time offset may have a more general geometric transformation than a position. For example, an additional rotation and scale, or a 3D transformation may be applied and other attributes, such as transparency. The thumbnail frames may be rendered with these properties, resulting in a display output where they are not necessarily rectangular, uniformly-sized, or where animated of uniform velocity. An example of such an arrangement is a spiral of images with the largest image being the most recent and the size of the images decreasing the further back into a recording you look. Older images could also be partially transparent and could run at a faster rate but be longer. In other words the section of video in later frames could be longer and could play faster. Each of these examples are showing how some clarity is deliberately lost (through size, transparency or speed) for older sections of video.

It will be appreciated that the above examples showing thumbnails of five frames are simplified versions of the production of thumbnail versions which would normally contain significantly more than five frames. It should further be noted that the term "thumbnail" does not limit the size of the second moving video image that is being displayed. For example, any number of thumbnails can be displayed to fulfil the requirements of the invention from two images (smaller than the full size display) to as many images as can be provided at reasonable resolution on the screen on which they are being displayed.

## Claims

1. A method of displaying video images, comprising:-

   dividing at least a portion of video data (10) into a plurality of video data sections (26), said video data being data that is capable of being processed and displayed on a display device (12) as a first moving video image (24) and said video data sections representing consecutive sections in time of said moving video image; displaying on a display device a plurality of second moving video images (28) processed from a plurality of said video data sections; and **characterised by** moving the position where said second moving video images are displayed on said display device so that a said second moving video image finishes being displayed where an adjacent second moving video image, in the directions of movement, started being displayed.

2. A method according to claim 1, further comprising one or more of the following features:-

   a) wherein said second moving video images are displayed on said display device in a line;
   b) wherein said second moving video images are displayed on said display device in a grid comprising a plurality of lines;
   c) wherein said second moving images are formed from a plurality of frames and each second moving image moves a distance ($d$) on said display device per frame according to the formula:

$$d = D/f$$

   where $D$ is the distance between equivalent edges of adjacent second moving video images and $f$ is the number of frames in said second moving video image;
   d) wherein said plurality of second moving video images are recorded together to form third video data which can be processed and displayed as a third moving video image comprising the plurality of second moving images; and
   e) providing selection means for selecting on said display device at least one portion of said display device associated with at least one respective second moving video image.

3. A method according to claim 2, further comprising one or more of the following features:-

   a) wherein a said second moving image at the end of a first line is repeated at the start of a next line and optionally said second moving image at the end of said first line fades out of view and said repeated second moving image fade into view; and

b) wherein said third moving video image is displayed on said display device in a loop.

4. A method according to any one of claims 1 to 3, further comprising:

reviewing recorded moving video images, by:-

capturing first video data using at least one video data capture device; and displaying on at least one display device a plurality of second moving video images according to any one of claims 1 to 3.

5. A method according to any one of claims 1 to 3, further comprising:

providing a menu on a display device for allowing a user to select a portion of first video data, by:-
displaying on at least one display device a plurality of second moving video images according to any one of claims 1 to 3;
providing selection means for selecting on said display device at least one portion of said display device associated with at least one respective second moving video image;
displaying on at least one display device at least one first moving video image processed from said first video data and starting at a point in said first video data represented by said selected second moving video image.

6. A computer program product for causing a computer to perform the steps of displaying video images, comprising:-

first computer executable code for dividing at least a portion of video data (10) into a plurality of video data sections (26), said video data being data that is capable of being processed and displayed on a display device (12) as a first moving video image (24) and said video data sections representing consecutive sections in time of said moving video image;
second computer executable code for displaying on a display device a plurality of second moving video images (28) processed from a plurality of said video data sections; and
**characterised by** third computer executable code for moving the position where said second moving video images are displayed on said display device so that a said second moving video image finishes being displayed where an adjacent second moving video image, in the directions of movement, started being displayed.

7. A computer program product according to claim 6, further comprising one or more of the following features:-

a) wherein said second computer executable code causes said second moving video images to be displayed on said display device in a line;
b) wherein said second computer executable code causes said second moving video images to be displayed on said display device in a grid comprising a plurality of lines;
c) wherein said third executable code causes said second moving images to be formed from a plurality of frames and each second moving image moves a distance ($d$) on said display device per frame according to the formula:

$$d = D/f$$

where $D$ is the distance between equivalent edges of adjacent second moving video images and $f$ is the number of frames in said second moving video image;
d) fourth computer executable code for recording said plurality of second moving video images together to form third video data which can be processed and displayed as a third moving video image comprising the plurality of second moving images; and
e) fifth computer code for providing selection means for selecting on said display device at least one portion of said display device associated with at least one respective second moving video image.

8. A computer program product according to claim 7, further comprising one or more of the following features:-

a) wherein said second computer executable code causes a said second moving image at the end of a first line to be repeated at the start of a next line and optionally said second computer executable code causes said second moving image at the end of said first line fades out of view and said repeated second moving image fade into view; and
b) wherein said fourth computer code causes said third moving video image to be displayed on said display device in a loop.

9. A computer program product according to any one of claims 6 to 8, the computer program product enabling reviewing recorded moving video images and comprising:-

sixth computer executable code for capturing first video data using at least one video data capture device; and

computer executable code for displaying on at least one display device a plurality of second moving video images according to any one of claims 6 to 8.

10. A computer program product according to any one of claims 6 to 8, the computer program product enabling provision of a menu on a display device for allowing a user to select a portion of first video data and comprising:-

computer executable code for displaying on at least one display device a plurality of second moving video images according to any one of claims 6 to 8;

seventh computer executable code for providing selection means for selecting on said display device at least one portion of said display device associated with at least one respective second moving video image;

eighth computer executable code for displaying on at least one display device at least one first moving video image processed from said first video data and starting at a point in said first video data represented by said selected second moving video image.

11. An apparatus for displaying video images, comprising:-

at least one processor configured to dividing at least a portion of video data (10) into a plurality of video data sections (26), said video data being data that is capable of being processed and displayed on a display device (12) as a first moving video image (24) and said video data sections representing consecutive sections in time of said moving video image; and

at least one display device (12) configured to displaying a plurality of second moving video images (28) processed from a plurality of said video data sections, **characterised in that** at least one said processor processes said data so as to move the position where said second moving video images are displayed on said display device so that a said second moving video image finishes being displayed where an adjacent second moving video image, in the directions of movement, started being displayed.

12. An apparatus according to claim 11, further comprising one or more of the following features:-

a) wherein said display device displays said second moving video images in a line;

b) wherein said display device displays said second moving video images in a grid comprising a plurality of lines;

c) wherein said display device displays said second moving images formed from a plurality of frames and each second moving image moves a distance (d) on said display device per frame according to the formula:

$$d = D/f$$

where D is the distance between equivalent edges of adjacent second moving video images and $f$ is the number of frames in said second moving video image;

d) wherein said plurality of second moving video images are recorded together to form third video data which can be processed and displayed as a third moving video image comprising the plurality of second moving images; and.

e) selection means for selecting on said display device at least one portion of said display device associated with at least one respective second moving video image.

13. An apparatus according to claim 12, further comprising one or more of the following features:-

a) wherein said display device displays a said second moving image at the end of a first line is repeated at the start of a next line and optionally said display device displays said second moving image at the end of said first line fading out of view and said repeated second moving image fading into view; and

b) wherein said third moving video image is displayed on said display device in a loop.

14. An apparatus according to any one of claims 11 to 13, the apparatus for reviewing recorded moving video images and comprising:-

at least one video capture device for capturing first video data; and

an apparatus for displaying video images according to any one of claims 11 to 13.

15. An apparatus according to any one of claims 11 to 13, the apparatus for providing a menu on a display device for allowing a user to select a portion of first video data and comprising:-

displaying on at least one display device a plurality of second moving video images according to any one of claims 11 to 13;
providing selection means for selecting on said display device at least one portion of said display device associated with at least one respective second moving video image;
displaying on at least one display device at least one first moving video image processed from said first video data and starting at a point in said first video data represented by said selected second moving video image.

## Patentansprüche

1. Verfahren zum Anzeigen von Videobildern, das Folgendes beinhaltet:

Unterteilen wenigstens eines Teils von Videodaten (10) in mehrere Videodatensektionen (26), wobei die genannten Videodaten Daten sind, die verarbeitet und auf einem Anzeigegerät (12) als erstes bewegtes Videobild (24) angezeigt werden können, und die genannten Videodatensektionen zeitlich aufeinander folgende Sektionen des genannten bewegten Videobildes repräsentieren;
Anzeigen, auf einem Anzeigegerät, von mehreren zweiten bewegten Videobildern (28), die von mehreren genannten Videodatensektionen verarbeitet werden; und
**gekennzeichnet durch** Bewegen der Position, in der die genannten zweiten bewegten Videobilder angezeigt werden, auf dem Anzeigegerät, sodass ein genanntes zweites bewegtes Videobild nicht mehr angezeigt wird, wenn ein benachbartes zweites bewegtes Videobild, in den Bewegungsrichtungen, angezeigt zu werden beginnt.

2. Verfahren nach Anspruch 1, das ferner eines oder mehrere der folgenden Merkmale beinhaltet:

a) wobei die genannten zweiten bewegten Videobilder auf dem genannten Anzeigegerät in einer Reihe angezeigt werden;
b) wobei die genannten zweiten bewegten Videobilder auf dem genannten Anzeigegerät in einem mehrere Reihen umfassenden Raster angezeigt werden;
c) wobei die genannten zweiten bewegten Bilder aus mehreren Frames gebildet sind und jedes zweite bewegte Bild sich um eine Distanz ($d$) auf dem genannten Anzeigegerät pro Frame gemäß der folgenden Formel bewegt:

$$d = D/f$$

wobei $D$ die Distanz zwischen äquivalenten Rändern von benachbarten zweiten bewegten Videobildern ist und $f$ die Anzahl von Frames in dem genannten zweiten bewegten Videobild ist;
d) wobei die genannten mehreren zweiten bewegten Videobilder zusammen aufgezeichnet werden, um dritte Videodaten zu bilden, die verarbeitet und als drittes bewegtes Videobild angezeigt werden können, das die mehreren zweiten bewegten Bilder umfasst; und
e) Bereitstellen von Auswahlmitteln zum Auswählen, auf dem genannten Anzeigegerät, wenigstens eines mit wenigstens einem jeweiligen zweiten bewegten Videobild assoziierten Teils des genannten Anzeigegeräts.

3. Verfahren nach Anspruch 2, das ferner eines oder mehrere der folgenden Merkmale beinhaltet:

a) wobei ein genanntes zweites bewegtes Bild am Ende einer ersten Reihe zu Beginn einer nächsten Reihe wiederholt wird und wobei das genannte zweite bewegte Bild optional am Ende der genannten ersten Reihe aus der Sicht ausgeblendet wird und das genannte wiederholte zweite bewegte Bild in die Sicht eingeblendet wird; und
b) wobei das genannte dritte bewegte Videobild auf dem genannten Anzeigegerät in einer Schleife angezeigt wird.

4. Verfahren nach einem der Ansprüche 1 bis 3, das ferner Folgendes beinhaltet:

Überprüfen von aufgezeichneten bewegten Videobildern durch:

Erfassen von ersten Videodaten unter Verwendung von wenigstens einem Videodatenerfassungsgerät; und
Anzeigen, auf wenigstens einem Anzeigegerät, von mehreren zweiten bewegten Videobildern nach einem der Ansprüche 1 bis 3.

5. Verfahren nach einem der Ansprüche 1 bis 3, das ferner Folgendes beinhaltet:

Bereitstellen eines Menüs auf einem Anzeigegerät, damit ein Benutzer einen Teil von ersten Videodaten auswählen kann, durch:

Anzeigen, auf wenigstens einem Anzeigegerät, von mehreren zweiten bewegten Videobildern nach einem der Ansprüche 1 bis 3;

Bereitstellen von Auswahlmitteln zum Auswählen, auf dem genannten Anzeigegerät, wenigstens eines mit wenigstens einem jeweiligen zweiten bewegten Videobild assoziierten Teils des genannten Anzeigegeräts;

Anzeigen, auf wenigstens einem Anzeigegerät, von wenigstens einem ersten bewegten Videobild, das von den genannten ersten Videodaten verarbeitet wurde, und beginnend an einem Punkt in den genannten ersten Videodaten, der durch das genannte gewählte zweite bewegte Videobild repräsentiert wird.

6. Computerprogrammprodukt, um zu bewirken, dass ein Computer die Schritte des Anzeigens von Videobildern ausführt, das Folgendes umfasst:

ersten computerausführbaren Code zum Unterteilen wenigstens eines Teils von Videodaten (10) in mehrere Videodatensektionen (26), wobei die genannten Videodaten Daten sind, die verarbeitet und auf einem Anzeigegerät (12) als erstes bewegtes Videobild (24) angezeigt werden können, und wobei die genannten Videodatensektionen zeitlich aufeinander folgende Sektionen des genannten bewegten Videobildes repräsentieren;

zweiten computerausführbaren Code zum Anzeigen, auf einem Anzeigegerät, von mehreren zweiten bewegten Videobildern (28), die von mehreren der genannten Videodatensektionen verarbeitet wurden; und

**gekennzeichnet durch** dritten computerausführbaren Code zum Bewegen der Position, an der die genannten zweiten bewegten Videobilder auf dem genannten Anzeigegerät angezeigt werden, sodass ein genanntes zweites bewegtes Videobild nicht mehr angezeigt wird, wo ein benachbartes zweites bewegtes Videobild, in den Bewegungsrichtungen, angezeigt zu werden beginnt.

7. Computerprogrammprodukt nach Anspruch 6, das ferner eines oder mehrere der folgenden Merkmale beinhaltet:

a) wobei der genannte zweite computerausführbare Code bewirkt, dass die genannten zweiten bewegten Videobilder auf dem genannten Anzeigegerät in einer Reihe angezeigt werden;

b) wobei der genannte zweite computerausführbare Code bewirkt, dass die genannten zweiten bewegten Videobilder auf dem genannten Anzeigegerät in einem Raster angezeigt werden, das mehrere Reihen umfasst;

c) wobei der genannte dritte ausführbare Code bewirkt, dass die genannten zweiten bewegten Bilder von mehreren Frames gebildet werden und jedes zweite bewegte Bild sich um eine Distanz (d) auf dem genannten Anzeigegerät pro Frame gemäß der folgenden Formel bewegt:

$$d = D/f$$

wobei D die Distanz zwischen äquivalenten Rändern von benachbarten zweiten bewegten Videobildern ist und $f$ die Anzahl von Frames in dem genannten zweiten bewegten Videobild ist;

d) vierten computerausführbaren Code zum gemeinsamen Aufzeichnen der genannten mehreren zweiten bewegten Videobilder, um dritte Videodaten zu bilden, die verarbeitet und als drittes bewegtes Videobild angezeigt werden können, das die mehreren zweiten bewegten Bilder umfasst; und

e) fünften Computercode zum Bereitstellen von Auswahlmitteln zum Auswählen, auf dem genannten Anzeigegerät, wenigstens eines mit wenigstens einem jeweiligen zweiten bewegten Videobild assoziierten Teils des genannten Anzeigegeräts.

8. Computerprogrammprodukt nach Anspruch 7, das ferner eines oder mehrere der folgenden Merkmale beinhaltet:

a) wobei der genannte zweite computerausführbare Code bewirkt, dass ein genanntes zweites bewegtes Bild am Ende einer ersten Reihe zu Beginn einer nächsten Reihe wiederholt wird und der genannte zweite computerausführbare Code optional bewirkt, dass das genannte zweite bewegte Bild am Ende der genannten ersten Reihe aus der Sicht ausgeblendet wird und das genannte wiederholte zweite bewegte Bild in die Sicht eingeblendet wird; und

b) wobei der genannte vierte Computercode bewirkt, dass das genannte dritte bewegte Videobild auf dem genannten Anzeigegerät in einer Schleife angezeigt wird.

9. Computerprogrammprodukt nach einem der Ansprüche 6 bis 8, wobei das Computerprogrammprodukt das Betrachten von aufgezeichneten bewegten Videobildern ermöglicht und Folgendes umfasst:

sechsten computerausführbaren Code zum Erfassen von ersten Videodaten mit wenigstens einem Videodatenerfassungsgerät; und computerausführbaren Code zum Anzeigen, auf wenigstens einem Anzeigegerät, von mehreren zweiten bewegten Videobildern nach einem der Ansprüche 6 bis 8.

10. Computerprogrammprodukt nach einem der Ansprüche 6 bis 8, wobei das Computerprogrammprodukt das Bereitstellen eines Menüs auf einem Anzeigegerät ermöglicht, damit ein Benutzer einen Teil von ersten Videodaten auswählen kann, und Folgendes umfasst:

computerausführbaren Code zum Anzeigen, auf wenigstens einem Anzeigegerät, von mehreren zweiten bewegten Videobildern nach einem der Ansprüche 6 bis 8;
siebten computerausführbaren Code zum Bereitstellen von Auswahlmitteln zum Auswählen, auf dem genannten Anzeigegerät, wenigstens eines mit wenigstens einem jeweiligen zweiten bewegten Videobild assoziierten Teils des genannten Anzeigegeräts;
achten computerausführbaren Code zum Anzeigen, auf wenigstens einem Anzeigegerät, wenigstens eines ersten bewegten Videobildes, das von den genannten ersten Videodaten verarbeitet wurde, beginnend an einem Punkt in den genannten ersten Videodaten, der durch das genannte gewählte zweite bewegte Videobild repräsentiert wird.

11. Vorrichtung zum Anzeigen von Videobildern, die Folgendes umfasst:

wenigstens einen Prozessor, konfiguriert zum Unterteilen wenigstens eines Teils von Videodaten (10) in mehrere Videodatensektionen (26), wobei die genannten Videodaten Daten sind, die verarbeitet und auf einem Anzeigegerät (12) als erstes bewegtes Videobild (24) angezeigt werden können, und wobei die genannten Videodatensektionen zeitlich aufeinander folgende Sektionen des genannten bewegten Videobildes repräsentieren; und
wenigstens ein Anzeigegerät (12), konfiguriert zum Anzeigen von mehreren zweiten bewegten Videobildern (28), die von mehreren genannten Videodatensektionen verarbeitet wurden, **dadurch gekennzeichnet, dass** wenigstens ein genannter Prozessor die genannten Daten verarbeitet, um die Position, an der die genannten zweiten bewegten Videobilder auf dem genannten Anzeigegerät angezeigt werden, zu bewegen, sodass ein genanntes zweites bewegtes Videobild nicht mehr angezeigt wird, wo ein benachbartes zweites bewegtes Videobild, in den Bewegungsrichtungen, angezeigt zu werden beginnt.

12. Vorrichtung nach Anspruch 11, die ferner eines oder mehrere der folgenden Merkmale umfasst:

a) wobei das genannte Anzeigegerät die genannten zweiten bewegten Videobilder in einer Reihe anzeigt;
b) wobei das genannte Anzeigegerät die genannten zweiten bewegten Videobilder in einem Raster anzeigt, das mehrere Reihen umfasst;
c) wobei das genannte Anzeigegerät die genannten zweiten bewegten Bilder anzeigt, die von mehreren Frames gebildet sind, und jedes zweite bewegte Bild sich um eine Distanz (d) auf dem genannten Anzeigegerät pro Frame gemäß der folgenden Formel bewegt:

$$d = D/f$$

wobei $D$ die Distanz zwischen äquivalenten Rändern von benachbarten zweiten bewegten Videobildern ist und $f$ die Anzahl von Frames in dem genannten zweiten bewegten Videobild ist;
d) wobei die genannten mehreren zweiten bewegten Videobilder zusammen aufgezeichnet werden, um dritte Videodaten zu bilden, die verarbeitet und als ein drittes bewegtes Videobild angezeigt werden können, das die mehreren zweiten bewegten Bilder umfasst; und
e) Auswahlmittel zum Auswählen, auf dem genannten Anzeigegerät, wenigstens eines mit wenigstens einem jeweiligen zweiten bewegten Videobild assoziierten Teils des genannten Anzeigegeräts.

13. Vorrichtung nach Anspruch 12, die ferner eines oder mehrere der folgenden Merkmale umfasst:

a) wobei das genannte Anzeigegerät ein genanntes zweites bewegtes Bild am Ende einer ersten Reihe zu Beginn einer nächsten Reihe anzeigt wiederholt wird und das genannte Anzeigegerät das genannte zweite bewegte Bild optional am Ende der genannten ersten Reihe aus der Sicht ausblendet und das genannte wiederholte zweite bewegte Bild in die Sicht einblendet; und
b) wobei das genannte dritte bewegte Videobild auf dem genannten Anzeigegerät in einer Schleife angezeigt wird.

14. Vorrichtung nach einem der Ansprüche 11 bis 13, wobei die Vorrichtung zum Betrachten von aufgezeichneten bewegten Videobildern Folgendes umfasst:

wenigstens ein Videoerfassungsgerät zum Erfassen von ersten Videodaten; und
eine Vorrichtung zum Anzeigen von Videobildern nach einem der Ansprüche 11 bis 13.

15. Vorrichtung nach einem der Ansprüche 11 bis 13, wobei die Vorrichtung zum Bereitstellen eines Menüs auf einem Anzeigegerät dient, damit ein Benutzer einen Teil von ersten Videodaten auswählen kann, und Folgendes umfasst:

Anzeigen, auf wenigstens einem Anzeigegerät, von mehreren zweiten bewegten Videobildern nach einem der Ansprüche 11 bis 13;
Bereitstellen von Auswahlmitteln zum Auswählen, auf dem genannten Anzeigegerät, wenigstens eines mit wenigstens einem jeweiligen zweiten bewegten Videobild assoziierten Teils des genannten Anzeigegeräts;
Anzeigen, auf wenigstens einem Anzeigegerät, wenigstens eines ersten bewegten Videobildes, das von den genannten ersten Videodaten verarbeitet wurde, beginnend an einem Punkt in den genannten ersten Videodaten, der durch das genannte gewählte zweite bewegte Videobild repräsentiert wird.

## Revendications

1. Procédé d'affichage d'images vidéo, comprenant les étapes consistant à :

diviser au moins une partie des données vidéo (10) en une pluralité de sections de données vidéo (26), lesdites données vidéo étant des données pouvant être traitées et affichées sur un dispositif d'affichage (12) en tant que première image vidéo mobile (24), et lesdites sections de données vidéo représentant des sections consécutives dans le temps de ladite image vidéo mobile ;
afficher sur un dispositif d'affichage une pluralité de deuxièmes images vidéo mobiles (28) traitées à partir d'une pluralité desdites sections de données vidéo ; et
**caractérisé par** l'étape consistant à déplacer la position où lesdites deuxièmes images vidéo mobiles sont affichées sur ledit dispositif d'affichage, de telle sorte qu'une dite deuxième image vidéo mobile finit de s'afficher là où une deuxième image vidéo mobile adjacente, dans les directions de déplacement, commence à s'afficher.

2. Procédé selon la revendication 1, comprenant en outre une ou plusieurs des caractéristiques suivantes :

a) dans lequel lesdites deuxièmes images vidéo mobiles sont affichées sur ledit dispositif d'affichage sur une ligne ;
b) dans lequel lesdites deuxièmes images vidéo mobiles sont affichées sur ledit dispositif d'affichage dans un quadrillage composé d'une pluralité de lignes ;
c) dans lequel lesdites deuxièmes images mobiles sont formées à partir d'une pluralité de trames, et chaque deuxième image mobile se déplace d'une distance (d) sur ledit dispositif d'affichage par trame, selon la formule :

$$d = D/f$$

où D est la distance entre des bords équivalents de deuxièmes images vidéo mobiles adjacentes, et f est le nombre de trames dans ladite deuxième image vidéo mobile ;
d) dans lequel ladite pluralité de deuxièmes images vidéo mobiles est enregistrée ensemble pour former des troisièmes données vidéo qui peuvent être traitées et affichées en tant que troisième image vidéo mobile comprenant la pluralité de deuxièmes images mobiles ; et
e) comprenant l'étape consistant à fournir un dispositif de sélection permettant de sélectionner, sur ledit dispositif d'affichage, au moins une partie dudit dispositif d'affichage associée à au moins une deuxième image vidéo mobile respective.

3. Procédé selon la revendication 2, comprenant en outre une ou plusieurs des caractéristiques suivantes :

a) dans lequel une dite deuxième image mobile à la fin d'une première ligne se répète au début d'une ligne suivante, et éventuellement, ladite deuxième image mobile à la fin de ladite première ligne disparaît en fondu à la fermeture, et ladite deuxième image mobile répétée apparaît en fondu à l'ouverture ; et
b) dans lequel ladite troisième image vidéo mobile est affichée sur ledit dispositif d'affichage en boucle.

4. Procédé selon l'une quelconque des revendications 1 à 3, comprenant en outre les étapes consistant à :

examiner des images vidéo mobiles enregistrées, en
capturant des premières données vidéo à l'aide d'au moins un dispositif de capture de données vidéo ; et
affichant sur au moins un dispositif d'affichage une pluralité de deuxièmes images vidéo mobiles, selon l'une quelconque des revendications 1 à 3.

5. Procédé selon l'une quelconque des revendications 1 à 3, comprenant en outre les étapes consistant à :

fournir un menu sur un dispositif d'affichage pour permettre à un utilisateur de sélectionner une partie des premières données vidéo, en :

affichant sur au moins un dispositif d'affichage une pluralité de deuxièmes images vidéo mobiles, selon l'une quelconque des revendications 1 à 3 ; fournissant un dispositif de sélection permettant de sélectionner, sur ledit dispositif d'affichage, au moins une partie dudit dispositif d'affichage associée à au moins une deuxième image vidéo mobile respective ; affichant sur au moins un dispositif d'affichage au moins une première image vidéo mobile traitée à partir desdites premières données vidéo, et commençant à un point, dans lesdites premières données vidéo, représenté par ladite deuxième image vidéo mobile sélectionnée.

6. Produit formant programme informatique pouvant amener un ordinateur à mettre en oeuvre les étapes d'affichage d'images vidéo, comprenant :

un premier code pouvant être exécuté par ordinateur servant à diviser au moins une partie des données vidéo (10) en une pluralité de sections de données vidéo (26), lesdites données vidéo étant des données pouvant être traitées et affichées sur un dispositif d'affichage (12) en tant que première image vidéo mobile (24), et lesdites sections de données vidéo représentant des sections consécutives dans le temps de ladite image vidéo mobile ; un deuxième code pouvant être exécuté par ordinateur servant à afficher sur un dispositif d'affichage une pluralité de deuxièmes images vidéo mobiles (28) traitées à partir d'une pluralité desdites sections de données vidéo ; et **caractérisé par** un troisième code pouvant être exécuté par ordinateur servant à déplacer la position où lesdites deuxièmes images vidéo mobiles sont affichées sur ledit dispositif d'affichage, de telle sorte qu'une dite deuxième image vidéo mobile finit de s'afficher là où une deuxième image vidéo mobile adjacente, dans les directions de déplacement, commence à s'afficher.

7. Produit formant programme informatique selon la revendication 6, comprenant en outre une ou plusieurs des caractéristiques suivantes :

a) dans lequel ledit deuxième code pouvant être exécuté par ordinateur entraîne l'affichage desdites deuxièmes images vidéo mobiles sur ledit dispositif d'affichage sur une ligne ; b) dans lequel ledit deuxième code pouvant être exécuté par ordinateur entraîne l'affichage desdites deuxièmes images vidéo mobiles sur ledit dispositif d'affichage dans un quadrillage composé d'une pluralité de lignes ; c) dans lequel ledit troisième code pouvant être exécuté par ordinateur entraîne la formation desdites deuxièmes images mobiles à partir d'une pluralité de trames, et chaque deuxième image mobile se déplace d'une distance (d) sur ledit dispositif d'affichage par trame, selon la formule :

$$d = D/f$$

où D est la distance entre des bords équivalents de deuxièmes images vidéo mobiles adjacentes, et f est le nombre de trames dans ladite deuxième image vidéo mobile ; d) un quatrième code pouvant être exécuté par ordinateur servant à enregistrer ensemble ladite pluralité de deuxièmes images vidéo mobiles pour former des troisièmes données vidéo qui peuvent être traitées et affichées en tant que troisième image vidéo mobile comprenant la pluralité de deuxièmes images mobiles ; et e) un cinquième code pouvant être exécuté par ordinateur servant à fournir un dispositif de sélection permettant de sélectionner, sur ledit dispositif d'affichage, au moins une partie dudit dispositif d'affichage associée à au moins une deuxième image vidéo mobile respective ;

8. Produit formant programme informatique selon la revendication 7, comprenant en outre une ou plusieurs des caractéristiques suivantes :

a) dans lequel ledit deuxième code pouvant être exécuté par ordinateur entraîne la répétition d'une dite deuxième image mobile à la fin d'une première ligne au début d'une ligne suivante, et éventuellement, ledit deuxième code pouvant être exécuté par ordinateur entraîne le fondu à la fermeture de ladite deuxième image mobile à la fin de ladite première ligne, et le fondu à l'ouverture de ladite deuxième image mobile répétée ; et b) dans lequel ledit quatrième code pouvant être exécuté par ordinateur entraîne l'affichage de ladite troisième image vidéo mobile sur ledit dispositif d'affichage en boucle.

9. Produit formant programme informatique selon l'une quelconque des revendications 6 à 8, le produit formant programme informatique permettant l'examen d'images vidéo mobiles enregistrées, et comprenant :

un sixième code pouvant être exécuté par ordinateur servant à capturer des premières données vidéo à l'aide d'au moins un dispositif de capture de données vidéo ; et
un code pouvant être exécuté par ordinateur servant à afficher sur au moins un dispositif d'affichage une pluralité de deuxièmes images vidéo mobiles, selon l'une quelconque des revendications 6 à 8.

10. Produit formant programme informatique selon l'une quelconque des revendications 6 à 8, le produit formant programme informatique permettant la fourniture d'un menu sur un dispositif d'affichage pour permettre à un utilisateur de sélectionner une partie des premières données vidéo, et comprenant :

un code pouvant être exécuté par ordinateur servant à afficher sur au moins un dispositif d'affichage une pluralité de deuxièmes images vidéo mobiles, selon l'une quelconque des revendications 6 à 8 ;
un septième code pouvant être exécuté par ordinateur servant à fournir un dispositif de sélection permettant de sélectionner, sur ledit dispositif d'affichage, au moins une partie dudit dispositif d'affichage associée à au moins une deuxième image vidéo mobile respective ;
un huitième code pouvant être exécuté par ordinateur servant à afficher sur au moins un dispositif d'affichage au moins une première image vidéo mobile traitée à partir desdites premières données vidéo, et commençant à un point, dans lesdites premières données vidéo, représenté par ladite deuxième image vidéo mobile sélectionnée.

11. Appareil d'affichage d'images vidéo, comprenant :

au moins un premier processeur pouvant diviser au moins une partie des données vidéo (10) en une pluralité de sections de données vidéo (26), lesdites données vidéo étant des données pouvant être traitées et affichées sur un dispositif d'affichage (12) en tant que première image vidéo mobile (24), et lesdites sections de données vidéo représentant des sections consécutives dans le temps de ladite image vidéo mobile ; et
au moins un dispositif d'affichage (12) pouvant afficher une pluralité de deuxièmes images vidéo mobiles (28) traitées à partir d'une pluralité desdites sections de données vidéo, **caractérisé en ce qu'**au moins un dit processeur traite lesdites données de manière à déplacer la position où lesdites deuxièmes images vidéo mobiles sont affichées sur ledit dispositif d'affichage, de telle sorte qu'une dite deuxième image vidéo mobile finit de s'afficher là où une deuxième image vidéo mobile adjacente, dans les directions de déplacement, commence à s'afficher.

12. Appareil selon la revendication 11, comprenant en outre une ou plusieurs des caractéristiques suivantes :

a) dans lequel ledit dispositif d'affichage affiche lesdites deuxièmes images vidéo mobiles sur ledit dispositif d'affichage sur une ligne ;
b) dans lequel ledit dispositif d'affichage affiche lesdites deuxièmes images vidéo mobiles sur ledit dispositif d'affichage dans un quadrillage composé d'une pluralité de lignes ;
c) dans lequel ledit dispositif d'affichage affiche lesdites deuxièmes images mobiles formées à partir d'une pluralité de trames, et chaque deuxième image mobile se déplace d'une distance (d) sur ledit dispositif d'affichage par trame, selon la formule :

$$d = D/f$$

où D est la distance entre des bords équivalents de deuxièmes images vidéo mobiles adjacentes, et f est le nombre de trames dans ladite deuxième image vidéo mobile ;
d) dans lequel ladite pluralité de deuxièmes images vidéo mobiles est enregistrée ensemble pour former des troisièmes données vidéo qui peuvent être traitées et affichées en tant que troisième image vidéo mobile comprenant la pluralité de deuxièmes images mobiles ; et
e) comprenant un dispositif de sélection permettant de sélectionner, sur ledit dispositif d'affichage, au moins une partie dudit dispositif d'affichage associée à au moins une deuxième image vidéo mobile respective.

13. Appareil selon la revendication 12, comprenant en outre une ou plusieurs des caractéristiques suivantes :

a) dans lequel ledit dispositif d'affichage affiche une dite deuxième image mobile à la fin d'une première ligne qui se répète au début d'une ligne suivante, et éventuellement, ledit dispositif d'affichage affiche ladite deuxième image mobile à la fin de ladite première ligne en fondu à la fermeture, et ladite deuxième image mobile répétée en fondu à l'ouverture ; et

b) dans lequel ladite troisième image vidéo mobile est affichée sur ledit dispositif d'affichage en boucle.

14. Appareil selon l'une quelconque des revendications 11 à 13, l'appareil permettant l'examen d'images vidéo mobiles enregistrées, et comprenant :

    au moins un dispositif de capture de vidéo permettant de capturer des premières données vidéo ; et
    un appareil permettant d'afficher des images vidéo selon l'une quelconque des revendications 11 à 13.

15. Appareil selon l'une quelconque des revendications 11 à 13, l'appareil permettant la fourniture d'un menu sur un dispositif d'affichage pour permettre à un utilisateur de sélectionner une partie des premières données vidéo, et comprenant :

    l'affichage sur au moins un dispositif d'affichage d'une pluralité de deuxièmes images vidéo mobiles, selon l'une quelconque des revendications 11 à 13 ;
    fournissant un dispositif de sélection permettant de sélectionner, sur ledit dispositif d'affichage, au moins une partie dudit dispositif d'affichage associée à au moins une deuxième image vidéo mobile respective ;
    l'affichage sur au moins un dispositif d'affichage d'au moins une première image vidéo mobile traitée à partir desdites premières données vidéo, et commençant à un point, dans lesdites premières données vidéo, représenté par ladite deuxième image vidéo mobile sélectionnée.

Fig 1.

Fig. 2

Fig 3

30  28a  28b  28c  28d  28e  28f

Fig 4.

| t = 0/5 | 0 | 5 | 10 | 15 | 20 | 25 |
| t = 1/5 | 1 | 6 | 11 | 16 | 21 | 26 |
| t = 2/5 | 2 | 7 | 12 | 17 | 22 | 27 |
| t = 3/5 | 3 | 8 | 13 | 18 | 23 | 28 |
| t = 4/5 | 4 | 9 | 14 | 19 | 24 | 29 |
| t = 5/5 | 0 | 5 | 10 | 15 | 20 | 25 |
| t = 6/5 | 1 | 6 | 11 | 16 | 21 | 26 |
| t = 7/5 | 2 | 7 | 12 | 17 | 22 | 27 |
| t = 8/5 | 3 | 8 | 13 | 18 | 23 | 28 |
| t = 9/5 | 4 | 9 | 14 | 19 | 24 | 29 |
| t = 10/5 | 0 | 5 | 10 | 15 | 20 | 25 |
| t = 11/5 | 1 | 6 | 11 | 16 | 21 | 26 |
| t = 12/5 | 2 | 7 | 12 | 17 | 22 | 27 |
| t = 13/5 | 3 | 8 | 13 | 18 | 23 | 28 |
| t = 14/5 | 4 | 9 | 14 | 19 | 24 | 29 |
| t = 15/5 | 0 | 5 | 10 | 15 | 20 | 25 |
| t = 16/5 | 1 | 6 | 11 | 16 | 21 | 26 |
| t = 17/5 | 2 | 7 | 12 | 17 | 22 | 27 |
| t = 18/5 | 3 | 8 | 13 | 18 | 23 | 28 |
| t = 19/5 | 4 | 9 | 14 | 19 | 24 | 29 |
| t = 20/5 | 0 | 5 | 10 | 15 | 20 | 25 |
| t = 21/5 | 1 | 6 | 11 | 16 | 21 | 26 |
| t = 22/5 | 2 | 7 | 12 | 17 | 22 | 27 |
| t = 23/5 | 3 | 8 | 13 | 18 | 23 | 28 |
| t = 24/5 | 4 | 9 | 14 | 19 | 24 | 29 |
| t = 25/5 | 0 | 5 | 10 | 15 | 20 | 25 |
| t = 26/5 | 1 | 6 | 11 | 16 | 21 | 26 |
| t = 27/5 | 2 | 7 | 12 | 17 | 22 | 27 |
| t = 28/5 | 3 | 8 | 13 | 18 | 23 | 28 |
| t = 29/5 | 4 | 9 | 14 | 19 | 24 | 29 |

28a  28a  28a  28a  32

t = 0/199

28

| 0 | 5 | 10 | 15 | 20 | 25 | 30 | 35 |
|---|---|---|---|---|---|---|---|
| 40 | 45 | 50 | 55 | 60 | 65 | 70 | 75 |
| 80 | 85 | 90 | 95 | 100 | 105 | 110 | 115 |
| 120 | 125 | 130 | 135 | 140 | 145 | 150 | 155 |
| 160 | 165 | 170 | 175 | 180 | 185 | 190 | 195 |

t = 1/199

| 1 | 6 | 11 | 16 | 21 | 26 | 31 | 36 |
|---|---|---|---|---|---|---|---|
| 41 | 46 | 51 | 56 | 61 | 66 | 71 | 76 |
| 81 | 86 | 91 | 96 | 101 | 106 | 111 | 116 |
| 121 | 126 | 131 | 136 | 141 | 146 | 151 | 156 |
| 161 | 166 | 171 | 176 | 181 | 186 | 191 | 196 |

t = 2/199

| 2 | 7 | 12 | 17 | 22 | 27 | 32 | 37 |
|---|---|---|---|---|---|---|---|
| 42 | 47 | 52 | 57 | 62 | 67 | 72 | 77 |
| 82 | 87 | 92 | 97 | 102 | 107 | 112 | 117 |
| 122 | 127 | 132 | 137 | 142 | 147 | 152 | 157 |
| 162 | 167 | 172 | 177 | 182 | 187 | 192 | 197 |

t = 3/199

| 3 | 8 | 13 | 18 | 23 | 28 | 33 | 38 |
|---|---|---|---|---|---|---|---|
| 43 | 48 | 53 | 58 | 63 | 68 | 73 | 78 |
| 83 | 88 | 93 | 98 | 103 | 108 | 113 | 118 |
| 123 | 128 | 133 | 138 | 143 | 148 | 153 | 158 |
| 163 | 168 | 173 | 178 | 183 | 188 | 193 | 198 |

t = 4/199

| 4 | 9 | 14 | 19 | 24 | 29 | 34 | 39 |
|---|---|---|---|---|---|---|---|
| 44 | 49 | 54 | 59 | 64 | 69 | 74 | 79 |
| 84 | 89 | 94 | 99 | 104 | 109 | 114 | 119 |
| 124 | 129 | 134 | 139 | 144 | 149 | 154 | 159 |
| 164 | 169 | 174 | 179 | 184 | 189 | 194 | 199 |

t = 5/199

| 0 | 5 | 10 | 15 | 20 | 25 | 30 | 35 |
|---|---|---|---|---|---|---|---|
| 40 | 45 | 50 | 55 | 60 | 65 | 70 | 75 |
| 80 | 85 | 90 | 95 | 100 | 105 | 110 | 115 |
| 120 | 125 | 130 | 135 | 140 | 145 | 150 | 155 |
| 160 | 165 | 170 | 175 | 180 | 185 | 190 | 195 |

t = 6/199

| 1 | 6 | 11 | 16 | 21 | 26 | 31 | 36 |
|---|---|---|---|---|---|---|---|
| 41 | 46 | 51 | 56 | 61 | 66 | 71 | 76 |
| 81 | 86 | 91 | 96 | 101 | 106 | 111 | 116 |
| 121 | 126 | 131 | 136 | 141 | 146 | 151 | 156 |
| 161 | 166 | 171 | 176 | 181 | 186 | 191 | 196 |

t = 7/199

| 2 | 7 | 12 | 17 | 22 | 27 | 32 | 37 |
|---|---|---|---|---|---|---|---|
| 42 | 47 | 52 | 57 | 62 | 67 | 72 | 77 |
| 82 | 87 | 92 | 97 | 102 | 107 | 112 | 117 |
| 122 | 127 | 132 | 137 | 142 | 147 | 152 | 157 |
| 162 | 167 | 172 | 177 | 182 | 187 | 192 | 197 |

Fig 5

t = 75/199   28

| 0 | 5 | 10 | 15 | 20 | 25 | 30 | 35 |
|---|---|----|----|----|----|----|----|
| 40 | 45 | 50 | 55 | 60 | 65 | 70 | 75 |
| 80 | 85 | 90 | 95 | 100 | 105 | 110 | 115 |
| 120 | 125 | 130 | 135 | 140 | 145 | 150 | 155 |
| 160 | 165 | 170 | 175 | 180 | 185 | 190 | 195 |

t = 76/199

| 1 | 6 | 11 | 16 | 21 | 26 | 31 | 36 |
|---|---|----|----|----|----|----|----|
| 41 | 46 | 51 | 56 | 61 | 66 | 71 | 76 |
| 81 | 86 | 91 | 96 | 101 | 106 | 111 | 116 |
| 121 | 126 | 131 | 136 | 141 | 146 | 151 | 156 |
| 161 | 166 | 171 | 176 | 181 | 186 | 191 | 196 |

t = 77/199

| 2 | 7 | 12 | 17 | 22 | 27 | 32 | 37 |
|---|---|----|----|----|----|----|----|
| 42 | 47 | 52 | 57 | 62 | 67 | 72 | 77 |
| 82 | 87 | 92 | 97 | 102 | 107 | 112 | 117 |
| 122 | 127 | 132 | 137 | 142 | 147 | 152 | 157 |
| 162 | 167 | 172 | 177 | 182 | 187 | 192 | 197 |

t = 78/199

| 3 | 8 | 13 | 18 | 23 | 28 | 33 | 38 |
|---|---|----|----|----|----|----|----|
| 43 | 48 | 53 | 58 | 63 | 68 | 73 | 78 |
| 83 | 88 | 93 | 98 | 103 | 108 | 113 | 118 |
| 123 | 128 | 133 | 138 | 143 | 148 | 153 | 158 |
| 163 | 168 | 173 | 178 | 183 | 188 | 193 | 198 |

t = 79/199

| 4 | 9 | 14 | 19 | 24 | 29 | 34 | 39 |
|---|---|----|----|----|----|----|----|
| 44 | 49 | 54 | 59 | 64 | 69 | 74 | 79 |
| 84 | 89 | 94 | 99 | 104 | 109 | 114 | 119 |
| 124 | 129 | 134 | 139 | 144 | 149 | 154 | 159 |
| 164 | 169 | 174 | 179 | 184 | 189 | 194 | 199 |

t = 80/199

| 0 | 5 | 10 | 15 | 20 | 25 | 30 | 35 |
|---|---|----|----|----|----|----|----|
| 40 | 45 | 50 | 55 | 60 | 65 | 70 | 75 |
| 80 | 85 | 90 | 95 | 100 | 105 | 110 | 115 |
| 120 | 125 | 130 | 135 | 140 | 145 | 150 | 155 |
| 160 | 165 | 170 | 175 | 180 | 185 | 190 | 195 |

t = 81/199

| 1 | 6 | 11 | 16 | 21 | 26 | 31 | 36 |
|---|---|----|----|----|----|----|----|
| 41 | 46 | 51 | 56 | 61 | 66 | 71 | 76 |
| 81 | 86 | 91 | 96 | 101 | 106 | 111 | 116 |
| 121 | 126 | 131 | 136 | 141 | 146 | 151 | 156 |
| 161 | 166 | 171 | 176 | 181 | 186 | 191 | 196 |

t = 82/199

| 2 | 7 | 12 | 17 | 22 | 27 | 32 | 37 |
|---|---|----|----|----|----|----|----|
| 42 | 47 | 52 | 57 | 62 | 67 | 72 | 77 |
| 82 | 87 | 92 | 97 | 102 | 107 | 112 | 117 |
| 122 | 127 | 132 | 137 | 142 | 147 | 152 | 157 |
| 162 | 167 | 172 | 177 | 182 | 187 | 192 | 197 |

Fig 6

**EP 2 688 308 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004128317 A
- EP 2463860 A
- US 2011085022 A
- US 2012174010 A
- US 2010134506 A